(19) Europäisches Patentamt
European Patent Office
Office européen des brevets

(11) Numéro de publication : **0 286 476 B1**

# (12) FASCICULE DE BREVET EUROPEEN

(45) Date de publication du fascicule du brevet : **13.05.92 Bulletin 92/20**

(51) Int. Cl.[5] : **C08F 2/22**

(21) Numéro de dépôt : **88400597.6**

(22) Date de dépôt : **14.03.88**

## (54) Procédé de préparation en émulsion suspendue de polymères et copolymères insolubles dans leurs compositions monomères oucomonomères.

(30) Priorité : **17.03.87 FR 8703636**

(43) Date de publication de la demande : **12.10.88 Bulletin 88/41**

(45) Mention de la délivrance du brevet : **13.05.92 Bulletin 92/20**

(84) Etats contractants désignés : **BE DE ES FR GB IT NL**

(56) Documents cités :
**EP-A- 0 193 641**
**DE-A- 1 802 089**
**DE-B- 1 520 849**
**FR-A- 2 029 247**
**GB-A- 1 203 524**
**US-A- 4 327 003**
**US-A- 4 642 323**

(73) Titulaire : **ELF ATOCHEM S.A.**
**4 & 8, Cours Michelet La Défense 10**
**F-92800 Puteaux (FR)**

(72) Inventeur : **Nogues, Pierre**
**Le Bourg Saint-Aubin Le Vertueux**
**F-27300 Bernay (FR)**
Inventeur : **Erard, François**
**3 rue Pierre Asse**
**F-27300 Bernay (FR)**

(74) Mandataire : **Rochet, Michel et al**
**ATOCHEM Département Propriété Industrielle**
**4, Cours Michelet La Défense 10 Cedex 42**
**F-92091 Paris-La-Défense (FR)**

EP 0 286 476 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un procédé de préparation de polymères et de copolymères, essentiellement de type vinylique, insolubles dans leurs compositions monomères ou comonomères, par polymérisation en émulsion suspendue du ou des monomères correspondants.

Par polymérisation en émulsion suspendue on entend une polymérisation, en présence d'un système amorceur dont au moins l'un des constituants est hydrosoluble, d'au moins un monomère dans une phase aqueuse dispersée sous forme finement divisée dans ledit monomère.

On a déjà proposé de préparer des polymères et des copolymères, essentiellement de type vinylique, insolubles dans leurs compositions monomères ou comonomères, par polymérisation en émulsion suspendue par un procédé qui consiste à disperser d'une façon finement divisée et en petites quantités une solution aqueuse d'au moins une partie d'un système amorceur dans une composition monomère ou comonomère de type vinylique, essentiellement à base de chlorure de vinyle, et à réaliser la polymérisation de ladite composition. Selon ce procédé la quantité de ladite solution aqueuse ne dépasse pas 10 % en poids de ladite composition monomère ou comonomère.

Ce procédé a été décrit dans le brevet français n° 69 01008, publié sous le n° 2029247, et dans ses certificats d'addition n° 69 37326, publié sous le n° 2070251, et n° 69 37327, publié sous le n° 2070922.

Ce procédé permet de préparer des polymères et des copolymères formés de particules de diamètre moyen pouvant aller de 0,1 à 2000 μm et de masse volumique apparente pouvant aller de 0,10 g/cm$^3$ à plus de 0,70 g/cm$^3$. Comparé aux procédés de polymérisation en masse ce procédé conduit à une quantité de croûtes formées moins élevée, l'adhérence des croûtes à la paroi des réacteurs étant en outre moins forte.

Dans le cas de la polymérisation d'une composition monomère ou comonomère à base de chlorure de vinyle ce procédé conduit, à température de polymérisation donnée, à des polymères et copolymères d'indice de viscosité, déterminé selon la norme internationale ISO 174, supérieur de 5 à 10 ml/g à celui des polymères et copolymères obtenus, toutes choses égales par ailleurs, selon les autres techniques de polymérisation et notamment selon la technique de polymérisation en masse. Il s'ensuit que, pour obtenir un polymère ou copolymère d'indice de viscosité donné, on opère à température de polymérisation plus élevée, ce qui conduit à une durée de polymérisation réduite.

Ce procédé ne permet pas cependant, dans le cas de la polymérisation d'une composition monomère ou comonomère à base de chlorure de vinyle, d'obtenir avec un taux de conversion de la composition monomère ou comonomère supérieur à 10 %, des polymères et copolymères formés de particules de diamètre moyen supérieur à 10 μm présentant à la fois une masse volumique apparente supérieure à 0,50 g/cm$^3$ et une porosité évaluée par une valeur de prise de plastifiant à température ambiante supérieure à 15 g de di(éthyl-2 hexyl)phtalate pour 100 g de résine.

Le procédé objet de l'invention, tout en présentant les avantages du procédé rappelé ci-dessus, n'en présente pas l'inconvénient énoncé précédemment.

Dans le cas de la polymérisation d'une composition monomère ou comonomère à base de chlorure de vinyle, le procédé de l'invention permet d'obtenir, avec un taux de conversion de la composition monomère ou comonomère supérieur à 50 % et pouvant dépasser 65 %, des polymères et des copolymères formés de particules de diamètre moyen supérieur à 10 μm présentant à la fois une masse volumique apparente pouvant dépasser 0,55 g/cm$^3$ et une porosité évaluée par une valeur de prise de plastifiant à température ambiante pouvant dépasser 30 g de di(éthyl-2 hexyl)phtalate pour 100 g de résine.

Selon le procédé de l'invention on disperse, sous forme finement divisée, une solution aqueuse d'au moins une partie d'un système amorceur dans une composition monomère ou comonomère de type vinylique et réalise la polymérisation de ladite composition.

Selon le procédé de l'invention la quantité d'eau de ladite solution aqueuse représente au moins 19 % et de préférence au moins 20 % en poids par rapport à ladite composition monomère ou comonomère.

Ladite quantité d'eau est généralement d'autant plus élevée, toutes choses égales par ailleurs, que le taux de conversion visé du ou des monomères mis en oeuvre est plus élevé. Elle n'est limitée supérieurement que par la valeur au-delà de laquelle il n'est pas possible de disperser la solution aqueuse dans ladite composition monomère ou comonomère. Ladite quantité représente généralement au plus 100 % et de préférence au plus 50 % en poids par rapport à ladite composition monomère ou comonomère.

Selon une première variante du procédé de l'invention on réalise d'abord, après préparation de la solution aqueuse d'au moins une partie du système amorceur, une dispersion finement divisée de celle-ci dans la composition monomère ou comonomère de type vinylique puis on soumet le milieu réactionnel ainsi préparé à des conditions de polymérisation en un seul stade réalisé sous agitation modérée.

Selon une deuxième variante du procédé de l'invention on réalise en un premier stade conjointement les opérations de dispersion finement divisée de la solution aqueuse d'au moins une partie du système amorceur

dans la composition monomère ou comonomère de type vinylique et de début de polymérisation de celle-ci sous agitation de turbulence élevée, jusqu'à un taux de conversion compris généralement entre 1 et 50 % et de préférence entre 3 et 25 %, on ajoute éventuellement au milieu réactionnel une composition monomère ou comonomère complémentaire de type vinylique identique à ou différente de celle mise en oeuvre au cours du premier stade, puis on soumet le milieu réactionnel au cours d'un deuxième stade à une polymérisation sous agitation lente, restant cependant suffisante pour éviter la réagglomération des grains en cours d'évolution.

Selon une troisième variante du procédé de l'invention on réalise en une première étape, dans un appareil dit prépolymériseur, conjointement les opérations de dispersion finement divisée de la solution aqueuse d'au moins une partie du système amorceur dans la composition monomère ou comonomère de type vinylique et de prépolymérisation de celle-ci sous agitation de turbulence élevée, jusqu'à un taux de conversion compris généralement entre 1 et 30 % et de préférence entre 3 et 15 %, puis on soumet en une deuxième étape le milieu réactionnel à une polymérisation finale sous agitation lente, restant cependant suffisante pour éviter la réagglomération des grains en cours d'évolution.

Selon la troisième variante du procédé de l'invention on peut, entre les deux étapes, ajouter au milieu réactionnel une composition monomère ou comonomère complémentaire identique à ou différente de celle mise en oeuvre au cours de la première étape. L'addition au milieu réactionnel de ladite composition monomère ou comonomère complémentaire peut être effectuée avant, pendant ou après le transfert du milieu réactionnel dans le polymériseur.

On peut également effectuer une opération préliminaire de dispersion selon l'invention, sous forme finement divisée, d'une solution aqueuse d'au moins une partie du système amorceur dans une composition monomère ou comonomère de type vinylique puis réaliser la mise en solution de la partie complémentaire du système amorceur dans la composition monomère ou comonomère de type vinylique conjointement avec une opération de polymérisation en un ou deux stades, ou avec une opération de prépolymérisation suivie d'une polymérisation finale.

On peut également, dans le cas où l'on utilise un système amorceur composé de plusieurs constituants solubles dans l'eau, introduire séparément les solutions aqueuses desdits constituants dans le milieu réactionnel à divers stades du processus de polymérisation.

Le procédé de l'invention peut également être mis en oeuvre en continu, notamment selon les techniques décrites dans les certificats d'addition référencés ci-avant.

Selon le procédé de l'invention on peut introduire au moins un émulsifiant et/ou un agent de suspension dans le milieu réactionnel, le plus généralement par l'intermédiaire de la solution aqueuse d'au moins une partie du système amorceur. Dans le cas de la préparation de polymères ou copolymères à base de chlorure de vinyle à particules de diamètre moyen supérieur à environ 10 µm le procédé de l'invention conduit, en l'absence d'émulsifiant, à des résines dont la forme des particules est proche de la forme sphérique et, en présence d'émulsifiant, toutes choses égales par ailleurs, à des résines dont les particules présentent une forme moins proche de la forme sphérique et une finesse plus élevée.

parmi les émulsifiants susceptibles d'être mis en oeuvre on peut citer, à titre d'exemples, les émulsifiants :

– de type cationique tels que les sels d'ammonium quaternaire de formule générale :

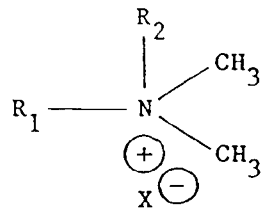

$R_1$ et $R_2$ étant des radicaux aliphatiques ou aromatiques et X un halogène,

– de type anionique tels que les savons d'acides gras, les alkylsulfates alcalins, les alkylsulfonates alcalins, les alkylarylsulfonates alcalins, les alkylsulfosuccinates alcalins, les alkylphosphates alcalins,

– de type non ionique tels que les polycondensats d'oxyde d'éthylène et/ou de propylène sur divers composés organiques hydroxylés tels que les alcools gras et les nonylphénols,

lesdits émulsifiants pouvant être utilisés seuls ou en mélange.

Parmi les agents de suspension susceptibles d'être mis en oeuvre, on peut citer, à titre d'exemples, les alcools polyvinyliques ; les dérivés de la cellulose tels que la méthylcellulose, la carboxycellulose ; les gélatines.

Le taux d'émulsifiant et/ou d'agent de suspension éventuellement mis en oeuvre est généralement de 0 à 2 % et de préférence de 0 à 0,5 % en poids par rapport au(x) monomère(s) mis en oeuvre.

Selon l'invention il y a lieu de mettre en oeuvre des monomères et comonomères présentant une certaine solubilité dans la phase aqueuse finement dispersée ci-dessus définie.

Selon l'invention également le polymère ou copolymère formé doit être insoluble dans la composition monomère ou comonomère qui n'a pas réagi.

Selon l'invention on peut employer notamment des compositions monomères ou comonomères dont l'un au moins des monomères est choisi dans le groupe formé par le chlorure de vinyle, le chlorure de vinylidène, l'acétate de vinyle, l'acrylonitrile, le fluorure de vinylidène, le tétrafluoroéthylène, le chlorotrifluoroéthylène, les acrylates d'alkyle tels l'acrylate de méthyle, les méthacrylates d'alkyle tels le méthacrylate de méthyle, les oléfines telles l'éthylène, le propylène, pourvu que le copolymère formé soit essentiellement insoluble dans la composition comonomère qui n'a pas réagi.

Selon l'invention on peut employer plus particulièrement des compositions monomères ou comonomères choisies dans le groupe formé par le chlorure de vinyle pris isolément ; les compositions à base de chlorure de vinyle et d'au moins une oléfine telle l'éthylène, le propylène, le butène-1, le butène-2, l'isobutène, le méthyl,4-pentène,1 ; les compositions à base de chlorure de vinyle et d'acétate de vinyle ; les compositions à base de chlorure de vinyle, d'acétate de vinyle et d'au moins une oléfine ; les compositions à base de chlorure de vinyle et de chlorure de vinylidène, pourvu que le copolymère formé soit essentiellement insoluble dans la composition comonomère qui n'a pas réagi.

A titre d'exemples non limitatifs de compositions comonomères utilisables selon l'invention on peut citer :

– les compositions comonomères à base de chlorure de vinyle et d'au moins une oléfine comprenant de 0,1 à 30 % et de préférence de 0,1 à 10 % en poids de ladite oléfine,

– les compositions comonomères à base de chlorure de vinyle et d'acétate de vinyle comprenant de 0,1 à 30 % et de préférence de 0,1 à 15 % en poids d'acétate de vinyle,

– les compositions comonomères à base de chlorure de vinyle et de chlorure de vinylidène comprenant de 0,1 à 30 % et de préférence de 0,1 à 20 % en poids de chlorure de vinylidène.

Pour une bonne mise en oeuvre du procédé de l'invention on utilise un système amorceur dont au moins l'un des constituants est insoluble dans le phase organique du milieu réactionnel, le ou lesdits constituants devant être solubles dans la phase aqueuse.

Parmi les systèmes amorceurs susceptibles d'être mis en oeuvre on peut citer à titre d'exemples : les persels ; le peroxyde d'hydrogène ; les persels ou le peroxyde d'hydrogène associés à un réducteur minéral ou organique tel que sels de métaux à plusieurs valences et notamment de fer et de cuivre, rongalite, bisulfites, métabisulfites, thiosulfates, sulfinates, acide ascorbique, oses et autres ; des systèmes dont l'un des composants est soluble dans la composition monomère ou comonomère et légèrement soluble dans l'eau, l'autre composant étant soluble dans l'eau et insoluble dans la composition monomère ou comonomère, systèmes parmi lesquels on peut citer : des systèmes formés d'oxydants tels les peroxydes, notamment le peroxyde d'acétylcyclohexanesulfonyle, les hydroperoxydes, tels ceux de cumène et de tertiobutyle activés par des réducteurs tels les sels de métaux à plusieurs valences, notamment de fer ou de cuivre, et plus spécialement par des sels tels que bisulfites, métabisulfites, thiosulfates, sulfinates, ou des réducteurs organiques tels l'acide ascorbique, les oses et autres ; des systèmes formés de composants réducteurs, solubles dans la composition monomère ou comonomère et peu solubles dans l'eau tels la benzoïne, les acétylacétonates, et de composants oxydants, d'activation, insolubles dans la composition monomère ou comonomère et solubles dans l'eau tels les persels ou le peroxyde d'hydrogène.

Le système amorceur représente généralement de 0,01 à 1 % et de préférence de 0,02 à 0,1 % en poids par rapport au(x) monomère(s) mis en oeuvre.

Le système amorceur représente généralement de 0,01 à 5 % et de préférence de 0,05 à 1,5 % en poids par rapport à l'eau de la solution aqueuse.

Les réactions de polymérisation selon l'invention peuvent être réalisées selon une large échelle de température, généralement comprise entre 0 et 100°C et de préférence entre 50 et 70°C. Toutefois on peut également envisager de réaliser des opérations de polymérisation à des températures inférieures ou égales à 0°C en ajoutant préalablement un antigel tel notamment du chlorure de calcium, ou un polyalcool, à la solution aqueuse d'au moins une partie du système amorceur devant être dispersée.

Les polymères préparés par le procédé de l'invention peuvent, si on le désire, être séparés à l'état pulvérulent du milieu de polymérisation par des techniques dont le choix varie selon que le diamètre moyen de leurs particules au sein du polymérisat est au plus égal ou supérieur à une valeur d'environ 10 μm.

Dans le cas ou l'on cherche à préparer un polymère sous forme de particules de diamètre moyen au plus égal à environ 10 μm on met en oeuvre avantageusement une quantité d'eau suffisante pour que ledit polymère, après dégazage de la composition monomère ou comonomère qui n'a pas réagi, se présente sous forme d'un latex, c'est-à-dire d'une dispersion aqueuse de particules. Dans ce cas, lorsque le taux de conversion visé du ou des monomères est atteint, on fait généralement subir au polymérisat un traitement de dégazage sous agitation et obtient ainsi ledit latex. Pour obtenir le polymère à l'état pulvérulent sec on peut traiter ledit latex par tous procédés connus tels que filtration, coagulation-essorage, écaillage, décantation centrifuge, atomisation.

Dans le cas où l'on cherche à préparer un polymère sous forme de particules de diamètre moyen supérieur à environ 10 μm on obtient un polymère se présentant, après élimination de la phase monomère ou comonomère liquide, selon, toutes choses égales par ailleurs, la quantité d'eau utilisée, sous la forme d'une poudre humide ou d'une bouillie. Dans ce cas, lorsque le taux de conversion visé du ou des monomères est atteint, pour obtenir le polymère à l'état pulvérulent sec on fait généralement subir au polymérisat un traitement dont la nature dépend essentiellement de la forme sous laquelle se présente le polymère obtenu après élimination de la phase monomère ou comonomère liquide. Dans le cas le plus général où le polymère se présente sous la forme d'une poudre humide on soumet habituellement le polymérisat à une opération à la fois de dégazage et de séchage, réalisée sous agitation, destinée à séparer, du polymère ou copolymère, l'eau et la composition monomère ou comonomère qui n'a pas réagi. Dans le cas où le polymère se présente sous la forme d'une bouillie on peut avantageusement soumettre le polymérisat à une opération de dégazage, réalisée sous agitation, séparer le polymère du milieu de polymérisation par tous procédés connus tels que filtration, essorage, décantation centrifuge, puis le soumettre à une opération de séchage. Le polymère ou copolymère pulvérulent obtenu est ensuite généralement soumis à une opération de tamisage visant à isoler le produit noble défini comme passant à travers un tamis d'ouverture de mailles donnée choisie en fonction du diamètre moyen des particules que l'on cherche à obtenir et de l'utilisation à laquelle ledit produit est destiné.

On donne ci-après, à titre indicatif et non limitatif, des exemples de réalisation du procédé de l'invention.

Les exemples 1, 4, 7, 9, 11, 13, 14, 15, 16, 18, 20, 22 et 24 sont selon l'invention.

Les exemples 2, 3, 5, 6, 8, 10, 12, 17, 19, 21, 23 et 25 sont donnés à titre comparatif.

Le produit noble est défini comme passant au tamis d'ouverture de mailles de 315 μm dans les exemples 1 à 8 et 12 à 25 et comme passant au tamis d'ouverture de mailles de 2000 μm dans les exemples 9 et 10.

L'indice de viscosité des polymères et des copolymères à base de chlorure de vinyle est déterminé selon la norme internationale ISO 174.

La masse volumique apparente des polymères et des copolymères est déterminée selon la norme française NFT 51-003 (méthode A).

La prise de plastifiant à température ambiante des polymères et des copolymères à base de chlorure de vinyle est déterminée selon la norme française NFT 51-782.

EXEMPLE 1

Dans un réacteur vertical de 1 litre de capacité, en acier inoxydable, muni d'une double enveloppe à circulation de fluide échangeur de chaleur et d'un agitateur à ancre passant au voisinage des parois du réacteur et tournant à 250 tr/min on introduit, après mise sous vide, 550 g de chlorure de vinyle et une solution aqueuse de 800 mg de persulfate de potassium dans 200 g d'eau et purge l'appareil par dégazage de 50 g de chlorure de vinyle.

La température du milieu réactionnel est portée en 45 minutes et maintenue à 56°C, ce qui correspond à une pression relative de 8,2 bars.

Après 2,5 heures de polymérisation à 56°C, dégazage et séchage, on recueille 125 g de chlorure de polyvinyle.

EXEMPLE 2

L'appareillage et les conditions de polymérisation sont les mêmes que dans l'exemple 1, à cela près que la quantité d'eau de la solution aqueuse est de 18 g.

Après 2,5 heures de polymérisation à 56°C, dégazage et séchage, on recueille 75 g de chlorure de polyvinyle.

EXEMPLE 3

L'appareillage et les conditions de polymérisation sont les mêmes que dans l'exemple 1, à cela près que la quantité d'eau de la solution aqueuse est de 18 g et la durée de polymérisation à 56°C de 5,5 heures.

Après polymérisation à 56°C, dégazage et séchage, on recueille 148 g de chlorure de polyvinyle.

EXEMPLE 4

L'appareillage est le même que dans l'exemple 1.

Dans le réacteur dont l'agitateur tourne à 250 tr/min on introduit, après mise sous vide, 550 g de chlorure de vinyle et une solution aqueuse de 300 mg de persulfate de potassium, 33 mg de sulfate ferrique, 46,2 mg de peroxyde d'hydrogène et 100 mg d'acide ascorbique dans 200 g d'eau et purge l'appareil par dégazage de 50 g de chlorure de vinyle.

La température de milieu réactionnel est portée en 45 minutes et maintenue à 70°C, ce qui correspond à une pression relative de 11,5 bars.

Après 15 minutes de polymérisation à 70°C, dégazage et séchage, on recueille 75 g de chlorure de polyvinyle.

EXEMPLE 5

L'appareillage et les conditions de polymérisation sont les mêmes que dans l'exemple 4, à cela près que la quantité d'eau de la solution aqueuse est de 38 g.

Après 15 minutes de polymérisation à 70°C, dégazage et séchage, on recueille 50 g de chlorure de polyvinyle.

EXEMPLE 6

L'appareillage et les conditions de polymérisation sont les mêmes que dans l'exemple 4, à cela près que la quantité d'eau de la solution aqueuse est de 38 g et la durée de polymérisation à 70°C de 30 minutes.

Après polymérisation à 70°C, dégazage et séchage, on recueille 95 g de chlorure de polyvinyle.

EXEMPLE 7

L'appareillage est le même que dans l'exemple 1.

Dans le réacteur dont l'agitateur tourne à 250 tr/min on introduit, après mise sous vide, 550 g de chlorure de vinyle et une solution aqueuse de 300 mg de persulfate de potassium, 33 mg de sulfate ferrique, 46,2 mg de peroxyde d'hydrogène, 100 mg d'acide ascorbique et 250 g de ditridécylsulfosuccinate de sodium dans 150 g d'eau et purge l'appareil par dégazage de 50 g de chlorure de vinyle.

La température de milieu réactionnel est portée en 45 minutes et maintenue à 56°C, ce qui correspond à une pression relative de 8,2 bars.

Après 3 heures de polymérisation à 56°C, dégazage et séchage, on recueille 275 g de chlorure de polyvinyle.

EXEMPLE 8

L'appareillage et les conditions de polymérisation sont les mêmes que dans l'exemple 7, à cela près que la quantité d'eau de la solution aqueuse est de 18 g et la durée de polymérisation à 56°C de 5,5 heures.

Après polymérisation à 56°C, dégazage et séchage, on recueille 150 g de chlorure de polyvinyle.

EXEMPLE 9

L'appareillage et les conditions de polymérisation sont les mêmes que dans l'exemple 1, à cela près que la vitesse de rotation de l'agitateur est de 75 tr/min.

Après 2,5 heures de polymérisation à 56°C, dégazage et séchage, on recueille 120 g de chlorure de polyvinyle.

EXEMPLE 10

L'appareillage et les conditions de polymérisation sont les mêmes que dans l'exemple 9, à cela près que la quantité d'eau de la solution aqueuse est de 38 g.

Après 2,5 heures de polymérisation à 56°C, dégazage et séchage, on recueille 100 g de chlorure de polyvinyle.

EXEMPLE 11

L'appareillage est le même que dans l'exemple 1.

Dans le réacteur dont l'agitateur tourne à 250 tr/min on introduit, après mise sous vide, 400 g d'acrylonitrile

et une solution aqueuse de 640 mg de persulfate de potassium dans 120 g d'eau.

La température du milieu réactionnel est portée en 45 minutes et maintenue à 70°C, ce qui correspond à une pression absolue de 0,8 bar.

Après 3 heures de polymérisation à 70°C, dégazage et séchage, on recueille 300 g de polyacrylonitrile.

EXEMPLE 12

L'appareillage et les conditions de polymérisation sont les mêmes que dans l'exemple 11, à cela près que la quantité d'eau de la solution aqueuse est de 30,4 g.

Après 3 heures de polymérisation à 70°C, dégazage et séchage, on recueille 260 g de polyacrylonitrile.

EXEMPLES 13 A 17

Dans un prépolymériseur vertical de 1 litre de capacité, en acier inoxydable, muni d'une double enveloppe à circulation de fluide échangeur de chaleur, d'un agitateur à turbine à 6 pales plates tournant à 700 tr/min et d'un déflecteur, on introduit, après mise sous vide, chacun des composés dont la nature et la quantité sont données, pour chaque exemple, dans le tableau 1 et purge l'appareil par dégazage de 50 g de chlorure de vinyle.

La température du milieu réactionnel est portée en 45 minutes et maintenue à 56°C, ce qui correspond à une pression relative de 8,2 bars dans le prépolymériseur.

Après 5 minutes de prépolymérisation, le taux de conversion étant voisin de 18 %, le milieu réactionnel est transféré dans un polymériseur vertical de 1 litre de capacité, en acier inoxydable, muni d'une double enveloppe à circulation de fluide échangeur de chaleur. Le polymériseur est muni d'un agitateur constitué par un ruban enroulé en spires hélicoïdales passant au voisinage des parois du polymériseur et fixé au moyen de trois supports sur un arbre rotatif traversant la partie supérieure du polymériseur selon son axe et solidaire, à son extrémité inférieure, d'un bras épousant la forme du fond bombé du polymériseur. La vitesse d'agitation est réglée à 100 tr/min.

La température du milieu réactionnel est portée en 30 minutes et maintenue à 56°C, ce qui correspond à une pression relative de 8,2 bars dans le polymériseur. La durée de polymérisation à 56°C dans le polymériseur et la quantité de chlorure de polyvinyle recueilli après dégazage et séchage sont indiquées, pour chaque exemple, dans le tableau 1.

TABLEAU 1

| | 13 | 14 | 15 | 16 | 17 |
|---|---|---|---|---|---|
| Chlorure de vinyle (g) | 502 | 470 | 456 | 442 | 550 |
| Solution aqueuse de : | | | | | |
| - persulfate de potassium (mg) | 488 | 453,6 | 440 | 420 | 539,8 |
| - sulfate ferrique (mg) | 53,6 | 49,6 | 48 | 46 | 59,3 |
| - peroxyde d'hydrogène (mg) | 74,2 | 70 | 67,2 | 65,1 | 81,9 |
| - acide ascorbique (mg) | 160 | 149,6 | 145 | 140 | 123,9 |
| dans : | | | | | |
| - eau (g) | 90,4 | 126 | 142,1 | 156,8 | 38 |
| Durée de polymérisation à 56°C dans le polymériseur (h) | 4 | 2,5 | 1,3 | 2,5 | 2,5 |
| Quantité de chlorure de polyvinyle recueilli (g) | 325,5 | 277,2 | 227,4 | 196 | 275 |

EXEMPLE 18

L'appareillage est le même que dans l'exemple 13.

Dans le prépolymériseur, dont l'agitateur tourne à 700 tr/min, on introduit, après mise sous vide, 442 g de chlorure de vinyle et une solution aqueuse de 378 mg de persulfate de potassium, 414 mg de sulfate ferrique, 58,6 mg de peroxyde d'hydrogène et 126 mg d'acide ascorbique dans 156,8 g d'eau et purge l'appareil par dégazage de 50 g de chlorure de vinyle.

La température du milieu réactionnel est portée en 45 minutes et maintenue à 56°C, ce qui correspond à une pression relative de 8,2 bars dans le prépolymériseur.

Après 5 minutes de prépolymérisation, le taux de conversion étant voisin de 15 %, le milieu réactionnel est transféré dans le polymériseur contenant 236 g de chlorure de vinyle. La vitesse d'agitation est réglée à 100 tr/min.

La température du milieu réactionnel est portée en 20 minutes et maintenue à 56°C, ce qui correspond à une pression relative de 8,2 bars dans le polymériseur.

Après 3,5 heures de polymérisation à 56°C dans le polymériseur, dégazage et séchage, on recueille 395,7 g de chlorure de polyvinyle.

EXEMPLE 19

L'appareillage et les conditions de prépolymérisation et de polymérisation sont les mêmes que dans l'exemple 18, à cela près que la quantité d'eau de la solution aqueuse est de 29,8 g.

Après 3,5 heures de polymérisation à 56°C dans le polymériseur, dégazage et séchage, on recueille 383 g de chlorure de polyvinyle.

EXEMPLE 20

L'appareillage et les conditions de prépolymérisation et de polymérisation sont les mêmes que dans l'exemple 18, à cela près qu'en plus du chlorure de vinyle on introduit dans le prépolymériseur 33 g d'acétate de vinyle et que la quantité d'eau de la solution aqueuse est de 170 g.

Après 3,5 heures de polymérisation à 56°C dans le polymériseur, dégazage et séchage, on recueille 396,6 g d'un copolymère de chlorure de vinyle et d'acétate de vinyle composé en poids de 95,8 % de chlorure de vinyle et de 4,2 % d'acétate de vinyle.

EXEMPLE 21

L'appareillage et les conditions de prépolymérisation et de polymérisation sont les mêmes que dans l'exemple 20, à cela près que la quantité d'eau de la solution aqueuse est de 32,3 g.

Après 3,5 heures de polymérisation à 56°C dans le polymériseur, dégazage et séchage, on recueille 383 g d'un copolymère de chlorure de vinyle et d'acétate de vinyle composé en poids de 96 % de chlorure de vinyle et 4 % d'acétate de vinyle.

EXEMPLE 22

Dans un prépolymériseur vertical de 30 litres de capacité, en acier inoxydable, muni d'une double enveloppe à circulation de fluide échangeur de chaleur, d'un agitateur à turbine de type "Lightnin" à 6 pales plates tournant à 680 tr/min et d'un déflecteur, on introduit, après mise sous vide, 17,6 kg de chlorure de vinyle et une solution aqueuse de 15,36 g de persulfate de potassium, 1,69 g de sulfate ferrique, 2,39 g de peroxyde d'hydrogène et 5,12 g d'acide ascorbique dans 6,485 kg d'eau et purge l'appareil par dégazage de 1,6 kg de chlorure de vinyle.

La température du milieu réactionnel est portée en 20 minutes et maintenue à 56°C, ce qui correspond à une pression relative de 8,2 bars dans le prépolymériseur.

Après 14 minutes de prépolymérisation, le taux de conversion étant voisin de 15 %, on transfère le milieu réactionnel dans un polymériseur vertical de 70 litres de capacité, en acier inoxydable, muni d'une double enveloppe à circulation de fluide échangeur de chaleur et contenant 9,5 kg de chlorure de vinyle. Le polymériseur est muni d'un agitateur constitué par un ruban enroulé en spires hélicoïdales passant au voisinage des parois du polymériseur et fixé au moyen de trois supports sur un arbre rotatif traversant la partie supérieure du polymériseur selon son axe et solidaire, à son extrémité inférieure, d'un bras épousant la forme du fond bombé du polymériseur. La vitesse d'agitation est réglée à 100 tr/min.

La température du milieu réactionnel est portée en 30 minutes et maintenue à 56°C, ce qui correspond à une pression relative de 8,2 bars dans le polymériseur.

Après 3,5 heures de polymérisation à 56°C dans le polymériseur, dégazage et séchage, on recueille 17,1 kg de chlorure de polyvinyle.

EXEMPLE 23

L'appareillage et les conditions de prépolymérisation et de polymérisation sont les mêmes que dans l'exemple 22, à cela près que la quantité d'eau de la solution aqueuse est de 1,216 kg.

Après 3,5 heures de polymérisation à 56°C dans le polymériseur, dégazage et séchage, on recueille 15,7 kg de chlorure de polyvinyle.

EXEMPLE 24

Dans un prépolymériseur vertical de 200 litres de capacité, en acier inoxydable, muni d'une double enveloppe à circulation de fluide échangeur de chaleur, d'un agitateur à turbine de type "Lightnin" à 6 pales plates tournant à 525 tr/min et d'un déflecteur, on introduit, après mise sous vide, 114,4 kg de chlorure de vinyle et une solution aqueuse de 99,84 g de persulfate de potassium, 10,98 g de sulfate ferrique, 15,561 g de peroxyde d'hydrogène et 33,28 g d'acide ascorbique dans 41,6 kg d'eau et purge l'appareil par dégazage de 10,4 kg de chlorure de vinyle.

La température du milieu réactionnel est portée en 20 minutes et maintenue à 56°C, ce qui correspond à une pression relative de 8,2 bars dans le prépolymériseur.

Après 14 minutes de prépolymérisation, le taux de conversion étant voisin de 14 %, on transfère le milieu réactionnel dans un polymériseur vertical de 400 litres de capacité, en acier inoxydable, muni d'une double

enveloppe à circulation de fluide échangeur de chaleur et contenant 62 kg de chlorure de vinyle. Le polymériseur est muni de deux agitateurs à commande indépendante, l'un A constitué par un ruban enroulé en spires hélicoïdales sur un arbre rotatif traversant la partie supérieure du polymériseur selon son axe, l'autre B constitué par deux bras épousant la forme du fond bombé du polymériseur et raccordés à un tourillon traversant le fond du polymériseur selon son axe. La vitesse de l'agitateur A est réglée à 50 tr/min et celle de l'agitateur B, en sens inverse, à 30 tr/min.

La température du milieu réactionnel est portée en 30 minutes et maintenue à 56°C, ce qui correspond à une pression relative de 8,2 bars dans le polymériseur.

Après 3 heures de polymérisation à 56°C dans le polymériseur, dégazage et séchage, on recueille 112,9 kg de chlorure de polyvinyle.

EXEMPLE 25

L'appareillage et les conditions de prépolymérisation et de polymérisation sont les mêmes que dans l'exemple 24, à cela près que la quantité d'eau de la solution aqueuse est de 7,9 kg.

Après 3 heures de polymérisation à 56°C dans le polymériseur, dégazage et séchage, on recueille 107,9 kg de chlorure de polyvinyle.

Le tableau 2 indique pour chaque exemple :

– le rapport pondéral eau/composition monomère ou comonomère initialement mise en oeuvre,
– le taux de conversion du ou des monomères,
– le taux pondéral de produit noble,

ainsi que, déterminés sur le produit noble :

– l'indice de viscosité (le cas échéant),
– le diamètre moyen des particules,
– la masse volumique apparente,
– la prise de plastifiant à température ambiante (le cas échéant).

TABLEAU 2

| Exemples | Rapport pondéral eau /composition monomère ou comonomère initialement mise en oeuvre (%) | Taux de conversion (%) | Taux pondéral de produit noble (%) | Indice de viscosité (ml/g) | Diamètre moyen des particules (µm) | Masse volumique apparente ($g/cm^3$) | Prise de plastifiant à température ambiante * |
|---|---|---|---|---|---|---|---|
| 1 | 40 | 25 | 96,5 | 123 | 160 | 0,15 | 85 |
| 2 | 3,6 | 15 | 90,2 | 115 | 166 | 0,37 | 28 |
| 3 | 3,6 | 29,6 | 90,1 | 123 | 186 | 0,56 | 11 |
| 4 | 40 | 15 | 97,4 | 98 | 140 | 0,19 | 82 |
| 5 | 7,6 | 10 | 91,4 | 97 | 134 | 0,36 | 56 |
| 6 | 7,6 | 19 | 91,4 | 93 | 115 | 0,47 | 28 |
| 7 | 30 | 55 | 96,7 | 123 | 92 | 0,56 | 22 |
| 8 | 3,6 | 30 | 98,0 | 120 | 97 | 0,39 | 14 |
| 9 | 40 | 24 | 88,0 | 125 | 1050 | 0,20 | 68 |
| 10 | 7,6 | 20 | 85,0 | 125 | 1000 | 0,65 | 12 |
| 11 | 30 | 75 | 82,5 | - | 50 | 0,40 | - |
| 12 | 7,6 | 65 | 80,2 | - | 48 | 0,56 | - |
| 13 | 20 | 72 | 90,2 | 121 | 141 | 0,59 | 19 |
| 14 | 30 | 66 | 92,0 | 123 | 154 | 0,55 | 24 |
| 15 | 35 | 56 | 94,6 | 121 | 177 | 0,55 | 24 |
| 16 | 40 | 50 | 95,7 | 124 | 162 | 0,25 | 40 |
| 17 | 7,6 | 55 | 90,5 | 120 | 180 | 0,79 | 7 |
| 18 | 40 | 63 | 92,5 | 122 | 250 | 0,58 | 30 |
| 19 | 7,6 | 61 | 91,5 | 120 | 225 | 0,80 | 6 |
| 20 | 40 | 60 | 85,2 | 112 | 160 | 0,62 | 25 |
| 21 | 7,6 | 55 | 80,5 | 110 | 155 | 0,79 | 5 |
| 22 | 40 | 67 | 94,8 | 124 | 141 | 0,56 | 33 |
| 23 | 7,6 | 62 | 92,5 | 122 | 125 | 0,82 | 6 |
| 24 | 40 | 68 | 94,6 | 127 | 155 | 0,57 | 22 |
| 25 | 7,6 | 65 | 94,2 | 128 | 135 | 0,81 | 4 |

* exprimée en g de di(éthyl-2 hexyl)phtalate pour 100 g de résine

## Revendications

1. Procédé de préparation de polymères et de copolymères, essentiellement de type vinylique, insolubles dans leurs compositions monomères ou comonomères, par polymérisation en émulsion suspendue du ou des monomères correspondants, selon lequel on disperse, sous forme finement divisée, une solution aqueuse d'au moins une partie d'un système amorceur dans une composition monomère ou comonomère de type vinylique et réalise la polymérisation de ladite composition, caractérisé par le fait que la quantité d'eau de ladite solution aqueuse représente au moins 19 % et de préférence au moins 20 % en poids par rapport à ladite composition monomère ou comonomère.

2. Procédé selon la revendication 1, caractérisé par le fait que la quantité d'eau de ladite solution aqueuse représente au plus 100 % et de préférence au plus 50 % en poids par rapport à ladite composition monomère ou comonomère.

3. Procédé selon l'une quelconque des revendications 1 et 2, caractérisé par le fait qu'on réalise d'abord, après préparation de la solution aqueuse d'au moins une partie du système amorceur, une dispersion finement divisée de celle-ci dans la composition monomère ou comonomère de type vinylique puis on soumet le milieu réactionnel ainsi préparé à des conditions de polymérisation en un seul stade réalisé sous agitation modérée.

4. Procédé selon l'une quelconque des revendications 1 et 2, caractérisé par le fait qu'on réalise en un premier stade conjointement les opérations de dispersion de la solution aqueuse d'au moins une partie du système amorceur dans la composition monomère ou comonomère et de début de polymérisation de celle-ci sous agitation de turbulence élevée, jusqu'à un taux de conversion compris généralement entre 1 et 50 % et de préférence entre 3 et 25 %, on ajoute éventuellement au milieu réactionnel une composition monomère ou comonomère complémentaire de type vinylique identique à ou différente de celle mise en oeuvre au cours du premier stade, puis on soumet le milieu réactionnel au cours d'un deuxième stade à une polymérisation sous agitation lente.

5. Procédé selon l'une quelconque des revendications 1 et 2, caractérisé par le fait qu'on réalise en une première étape, dans un appareil dit prépolymériseur, conjointement les opérations de dispersion de la solution aqueuse d'au moins une partie du système amorceur dans la composition monomère ou comonomère et de prépolymérisation de celle-ci sous agitation de turbulence élevée, jusqu'à un taux de conversion compris généralement entre 1 et 30 % et de préférence entre 3 et 15 %, puis on soumet en une deuxième étape le milieu réactionnel à une polymérisation finale sous agitation lente.

6. Procédé selon la revendication 5, caractérisé par le fait qu'entre les deux étapes on ajoute au milieu réactionnel une composition monomère ou comonomère complémentaire identique à ou différente de celle mise en oeuvre au cours de la première étape.

7. Procédé selon l'une quelconque des revendications 1 et 2, caractérisé par le fait qu'on effectue une opération préliminaire de dispersion, sous forme finement divisée, d'une solution aqueuse d'au moins une partie du système amorceur dans une composition monomère ou comonomère puis on réalise la mise en solution de la partie complémentaire du système amorceur dans la composition monomère ou comonomère conjointement avec une opération de polymérisation en un ou deux stades, ou avec une opération de prépolymérisation suivie d'une polymérisation finale.

8. Procédé selon l'une quelconque des revendications 1 à 7 dans lequel on utilise un système amorceur composé de plusieurs constituants solubles dans l'eau, caractérisé par le fait qu'on introduit séparément les solutions aqueuses desdits constituants dans le milieu réactionnel à divers stades du processus de polymérisation.

9. Procédé selon l'une quelconque des revendications 1 à 8, caractérisé par le fait qu'on introduit dans le milieu réactionnel, notamment par: l'intermédiaire de la solution aqueuse d'au moins une partie du système amorceur, au moins un émulsifiant choisi dans le groupe formé des émulsifiants de type cationique, tels que les sels d'ammonium quaternaire, de type anionique, tels que les savons d'acides gras, les alkylsulfates alcalins, les alkylsulfonates alcalins, les alkylarylsulfonates alcalins, les alkylsulfosuccinates alcalins, les alkylphosphates alcalins, de type non ionique tels que les polycondensats d'oxyde d'éthylène et/ou de propylène sur divers composés organiques hydroxylés.

10. Procédé selon l'une quelconque des revendications 1 à 9, caractérisé par le fait qu'on introduit dans le milieu réactionnel, notamment par l'intermédiaire de la solution aqueuse d'au moins une partie du système amorceur, au moins un agent de suspension choisi dans le groupe formé par les alcools polyvinyliques ; les dérivés de la cellulose tels que la méthylcellulose, la carboxycellulose ; les gélatines.

11. Procédé selon l'une quelconque des revendications 1 à 10, caractérisé par le fait qu'on emploie des compositions monomères ou comonomères dont l'un au moins des monomères est choisi dans le groupe formé par le chlorure de vinyle, le chlorure de vinylidène, l'acétate de vinyle, l'acrylonitrile, le fluorure de vinylidène, le tétrafluoroéthylène, le chlorotrifluoroéthylène, les acrylates d'alkyle tels l'acrylate de méthyle, les méthacrylates d'alkyle tels le méthacrylate de méthyle, les oléfines telles l'éthylène, le propylène, pourvu que le copolymère formé soit essentiellement insoluble dans la composition comonomère qui n'a pas réagi.

12. Procédé selon la revendication 11, caractérisé par le fait qu'on emploie des compositions monomères ou comonomères choisies dans le groupe formé par le chlorure de vinyle pris isolément ; les compositions à base de chlorure de vinyle et d'au moins un oléfine telle l'éthylène, le propylène, le butène-1, le butène-2, l'isobutène, le méthyl,4-pentène,1 ; les compositions à base de chlorure de vinyle et d'acétate de vinyle ; les compositions à base de chlorure de vinyle, d'acétate de vinyle et d'au moins une oléfine ; les compositions à base de chlorure de vinyle et de chlorure de vinylidène, pourvu que le copolymère formé soit essentiellement insoluble dans la composition comonomère qui n'a pas réagi.

13. Procédé selon l'une quelconque des revendications 1 à 12, caractérisé par le fait qu'on utilise un système amorceur dont au moins l'un des constituants est insoluble dans la phase organique du milieu réactionnel, le ou lesdits constituants étant solubles dans la phase aqueuse.

14. Procédé selon l'une quelconque des revendications 1 à 13, caractérisé par le fait qu'on emploie un système amorceur choisi dans le groupe formé des persels ; du peroxyde d'hydrogène ; des persels ou du peroxyde d'hydrogène associés à un réducteur minéral ou organique ; des systèmes amorceurs dont l'un des composants est soluble dans la composition monomère ou comonomère et légèrement soluble dans l'eau, l'autre composant étant soluble dans l'eau et insoluble dans la composition monomère ou comonomère ; des systèmes amorceurs formés de composants réducteurs, solubles dans la composition monomère ou comonomère et peu solubles dans l'eau, et de composants oxydants, d'activation, insolubles dans la composition monomère ou comonomère de solubles dans l'eau.

15. Procédé selon l'une quelconque des revendications 1 à 14, caractérisé par le fait que le système amorceur représente de 0,01 à 1 % et de préférence de 0,02 à 0,1 % en poids par rapport au(x) monomère(s) mis en oeuvre.

16. Procédé selon l'une quelconque des revendications 1 à 15, caractérisé par le fait que le système amorceur représente de 0,01 à 5 % et de préférence de 0,05 à 1,5 % en poids par rapport à l'eau de la solution aqueuse.

## Claims

1. Process for the preparation of polymers and copolymers, essentially of the vinyl type, which are insoluble in their monomeric or comonomeric compositions, by polymerisation in suspended emulsion of the corresponding monomer(s), according to which an aqueous solution of at least a part of an initiating system is dispersed, in a finely divided form, in a monomeric or comonomeric composition of the vinyl type and the polymerisation of the said composition is effected, characterised in that the quantity of water in the said aqueous solution represents at least 19% and preferably at least 20% by weight relative to the said monomeric or comonomeric composition.

2. Process according to Claim 1, characterised in that the quantity of water in the said aqueous solution represents not more than 100% and preferably not more than 50% by weight relative to the said monomeric or comonomeric composition.

3. Process according to either of Claims 1 and 2, characterised in that, after preparation of the aqueous solution of at least a part of the initiating system, a finely divided dispersion of this solution is first produced in the monomeric or comonomeric composition of the vinyl type and then the reaction mixture thus prepared is subjected to polymerisation conditions in a single stage carried out with moderate stirring.

4. Process according to either of Claims 1 and 2, characterised in that the operations of dispersion of the aqueous solution of at least a part of the initiating system in the monomeric or comonomeric composition and of the beginning of polymerisation of the latter with high-turbulence stirring are conjointly carried out in a first stage, to a degree of conversion generally of between 1 and 50% and preferably between 3 and 25%, a complementary monomeric or comonomeric composition of the vinyl type identical with or different from that employed during the first stage is optionally added to the reaction mixture, and then the reaction mixture is subjected during a second stage to a polymerisation with slow stirring.

5. Process according to either of Claims 1 and 2, characterised in that the operations of dispersion of the aqueous solution of at least a part of the initiating system in the monomeric or comonomeric composition and of prepolymerisation of the latter with high-turbulence stirring are carried out conjointly in a first stage, in an apparatus called a prepolymeriser, to a degree of conversion generally of between 1 and 30% and preferably between 3 and 15%, and then in a second stage the reaction mixture is subjected to a final polymerisation with slow stirring.

6. Process according to Claim 5, characterised in that a complementary monomeric or comonomeric

composition identical with or different from that employed during the first stage is added to the reaction mixture between the two stages.

7. Process according to either of Claims 1 and 2, characterised in that a preliminary operation of dispersion, in a finely divided form, of an aqueous solution of at least a part of the initiating system in a monomeric or comonomeric composition is carried out and then the dissolving of the complementary part of the initiating system in the monomeric or comonomeric composition is carried out conjointly with a single- or two-stage polymerisation operation, or with a prepolymerisation operation followed by a final polymerisation.

8. Process according to any one of Claims 1 to 7 in which an initiating system consisting of several water-soluble constituents is employed, characterised in that the aqueous solutions of the said constituents are introduced separately into the reaction mixture at various stages of the polymerisation process.

9. Process according to any one of Claims 1 to 8, characterised by the introduction into the reaction medium, particularly by means of the aqueous solution of at least a part of the initiating system, of at least one emulsifier chosen from the group consisting of emulsifiers of cationic type such as quaternary ammonium salts, of an anionic type such as fatty acid soaps, alkali metal alkyl sulphates, alkali metal alkylsulphonates, alkali metal alkylarylsulphonates, alkali metal alkylsulphosuccinates and alkali metal alkyl phosphates, and of nonionic type such as the polycondensates of ethylene and/or propylene oxide with various hydroxylated organic compounds.

10. Process according to any one of Claims 1 to 9, characterised by the introduction into the reaction mixture, particularly by means of the aqueous solution of at least a part of the initiating system, of at least one suspension agent chosen from the group consisting of polyvinyl alcohols, cellulose derivatives such as methyl cellulose and carboxycellulose, and gelatines.

11. Process according to any one of Claims 1 to 10, characterised in that monomeric or comonomeric compositions are employed in which at least one of the monomers is chosen from the group consisting of vinyl chloride, vinylidene chloride, vinyl acetate, acrylonitrile, vinylidene fluoride, tetrafluoroethylene, chlorotrifluoroethylene, alkyl acrylates such as methyl acrylate, alkyl methacrylates such as methyl methacrylate, and olefins such as ethylene and propylene, provided that the copolymer formed is essentially insoluble in the comonomeric composition which has not reacted.

12. Process according to Claim 11, characterised in that monomeric or comonomeric compositions are employed which are chosen from the group consisting of vinyl chloride taken in isolation, compositions based on vinyl chloride and at least one olefin such as ethylene, propylene, 1-butene, 2-butene, isobutene and 4-methyl-1-pentene, compositions based on vinyl chloride and vinyl acetate, compositions based on vinyl chloride, vinyl acetate and at least one olefin, and compositions based on vinyl chloride and vinylidene chloride, provided that the copolymer formed is essentially insoluble in the comonomeric composition which has not reacted.

13. Process according to any one of Claims 1 to 12, characterised in that an initiating system is employed in which at least one of the constituents is insoluble in the organic phase of the reaction mixture, the said constituent(s) being soluble in the aqueous phase.

14. Process according to any one of Claims 1 to 13, characterised in that an initiating system is employed which is chosen from the group consisting of persalts, hydrogen peroxide, persalts or hydrogen peroxide associated with an inorganic or organic reducing agent, initiating systems in which one of the components is soluble in the monomeric or comonomeric compositions and slightly soluble in water, the other component being soluble in water and insoluble in the monomeric or comonomeric composition, and initiating systems consisting of reducing components which are soluble in the monomeric or comonomeric composition and poorly soluble in water, and activation oxidising components which are insoluble in the monomeric or comonomeric composition and soluble in water.

15. Process according to any one of Claims 1 to 14, characterised in that the initiating system represents from 0. 01 to 1% and preferably from 0. 02 to 0. 1% by weight relative to the monomer (s) employed.

16. Process according to any one of Claims 1 to 15, characterised in that the initiating system represents from 0. 01 to 5 % and preferably from 0.05 to 1.5% by weight relative to the water in the aqueous solution.

## Patentansprüche

1. Verfahren zur Herstellung von Polymeren und Copolymeren, im wesentlichen vom Vinyltyp, die in ihren Monomer- oder Comonomeransätzen unlöslich sind, durch Polymerisieren in suspendierter Emulsion des oder der entsprechenden Monomeren, bei dem man in fein zerteilter Form eine wäßrige Lösung mindestens eines Teils eines Initiatorsystems in einem Monomer- oder Comonomeransatz vom Vinyltyp dispergiert und die Polymerisation des Ansatzes durchführt, dadurch gekennzeichnet, daß die Menge Wasser der genannten wäßrigen Lösung mindestens 19 Gew.-% und vorzugsweise mindestens 20 Gew.-%, bezogen auf den Monomer- oder Comonomeransatz, ausmacht,

2. Verfahren nach Anspruch 1, dadurch gekennzeichnet, daß die Menge Wasser der wäßrigen Lösung höchstens 100 Gew.-% und vorzugsweise höchstens 50 Gew.-%, bezogen auf den Monomer- oder Comonomeransatz, ausmacht,

3. Verfahren nach einem der Ansprüche 1 und 2, dadurch gekennzeichnet, daß man zunächst nach Herstellung der wäßrigen Lösung mindestens eines Teils des Initiatorsystems eine fein zerteilte Dispersion dieser (Lösung) in dem Monomer- oder Comonomeransatz vom Vinyltyp erzeugt und dann das so hergestellte Reaktionsgemisch Bedingungen der einstufigen Polymerisation, durchgeführt unter mäßigem Rühren, unterwirft,

4. Verfahren nach einem der Ansprüche 1 und 2, dadurch gekennzeichnet, daß man in einer ersten Stufe gleichzeitig die Arbeitsgänge der Dispersion der wäßrigen Lösung mindestens eines Teils des Initiatorsystems im Monomer- oder Comonomeransatz und den Beginn der Polymerisation dieses unter Rühren mit erhöhter Turbulenz ausführt, bis zu einem Umwandlungsgrad von allgemein 1 bis 50%, vorzugsweise 3 bis 25%, daß man gegebenenfalls dem Reaktionsgemisch einen zusätzlichen Monomer- oder Comonomeransatz vom Vinyltyp, der mit dem in der ersten Stufe eingesetzten identisch oder davon verschieden ist, zusetzt und dann das Reaktionsgemisch im Verlauf einer zweiten Stufe unter langsamem Rühren polymerisiert.

5. Verfahren nach einem der Ansprüche 1 und 2, dadurch gekennzeichnet, daß man in einer ersten Stufe in einer Prepolymerisator bezeichneten Vorrichtung gleichzeitig die Arbeitsgänge der Dispersion der wäßrigen Lösung mindestens eines Teils des Initiatorsystems in dem Monomer- oder Comonomeransatz und die Prepolymerisation dieses unter Rühren mit erhöhter Turbulenz bis zu einem Umwandlungsgrad von allgemein 1 bis 30% und vorzugsweise 3 bis 15% ausführt und dann in einer zweiten Stufe das Reaktionsgemisch unter langsamem Rühren zu Ende polymerisiert.

6. Verfahren nach Anspruch 5, dadurch gekennzeichnet, daß man zwischen den beiden Stufen dem Reaktionsgemisch einen zusätzlichen Monomer- oder Comonomeransatz zusetzt, der mit dem im Verlauf der ersten Stufe eingesetzten identisch oder von diesem verschieden ist.

7. Verfahren nach einem der Ansprüche 1 und 2, dadurch gekennzeichnet, daß man in einem vorausgehenden Arbeitsgang eine wäßrige Lösung mindestens eines Teils des Initiatorsystems in einem Monomer- oder Comonomeransatz fein zerteilt dispergiert und dann gleichzeitig den zusätzlichen Teil des Initiatorsystems in dem Monomer- oder Comonomeransatz in Lösung bringt und in einer oder in zwei Stufen polymerisiert oder prepolymerisiert und anschließend zu Ende polymerisiert.

8. Verfahren nach einem der Ansprüche 1 bis 7, bei dem man ein Initiatorsystem verwendet, das aus mehreren wasserlöslichen Bestandteilen zusammengesetzt ist, dadurch gekennzeichet, daß man die wäßrigen Lösungen dieser Bestandteile getrennt in verschiedenen Stadien des Polymerisationsverfahrens in das Reaktionsgemisch einbringt.

9. Verfahren nach einem der Ansprüche 1 bis 8, dadurch gekennzeichnet, daß man in das Reaktionsgemisch vor allem mit Hilfe der wäßrigen Lösung mindestens eines Teils des Initiatorsystems mindestens einen Emulgator einbringt, der ausgewählt ist aus der Gruppe, gebildet von den Emulgatoren von kationischen Typ wie die quaternären Ammoniumsalze, vom anionischen Typ wie die Fettsäureseifen, die Alkalialkylsulfate, die Alkalialkylsulfonate, die Alkalialkylarylsulfonate, die Alkalialkylsulfosuccinate (und) die Alkalialkylphosphate, von nichtionischen Typ wie die Polykondensationsprodukte aus Ethylenoxid und/oder Propylenoxid und verschiedenen hydroxylierten organischen Verbindungen.

10. Verfahren nach einem der Ansprüche 1 bis 9, dadurch gekennzeichnet, daß man in das Reaktionsgemisch vor allem mit Hilfe der wäßrigen Lösung mindestens eines Teils des Initiatorsystems mindestens ein Suspensionsmittel einbringt, ausgewählt aus der Gruppe, die von den Polyvinylalkolholen, den Cellulosederivaten wie Methylcellulose und Carboxycellulose und den Gelatinen gebildet ist.

11. Verfahren nach einem der Ansprüche 1 bis 10, dadurch gekennzeichnet, daß man Mononer- oder Comonomeransätze verwendet, bei denen mindestens eines der Monomeren aus der Gruppe, gebildet von Vinylchlorid, Vinylidenchlorid, Vinylacetat, Acrylnitril, Vinylidenfluorid, Tetrafluorethylen, Chlortrifluorethylen, Alkylacrylaten wie Methylacrylat, Alkylmethacrylaten, wie Methylmethacrylat, Olefinen wie Ethylen und Propylen, ausgewählt ist, vorausgesetzt, daß das entstandene Copolymer im wesentlichen in dem nicht umgesetzten Monomeransatz unlöslich ist.

12. Verfahren nach Anspruch 11, dadurch gekennzeichnet, daß man Monomer- oder Comonomeransätze verwendet, die aus der Gruppe, gebildet von Vinylchlorid alleine, Ansätze auf der Basis von Vinylchlorid und mindestens einem Olefin wie Ethylen, Propylen, Buten-1, Buten-2, Isobuten, 4-Methyl-1-penten, den Ansätzen auf der Basis von Vinylchlorid und Vinylacetat, den Ansätzen auf der Basis von Vinylchlorid, Vinylacetat und mindestens einem Olefin, den Ansätzen auf Basis von Vinylchlorid und Vinylidenchlorid, ausgewählt sind, vorausgesetzt, daß das entstandene Copolymer im wesentlichen in dem nicht umgesetzten Comonomeransatz unlöslich ist.

13. Verfahren nach einem der Ansprüche 1 bis 12, dadurch gekennzeichnet, daß man ein Initiatorsystem

verwendet, bei dem mindestens einer der Bestandteile in der organischen Phase des Reaktionsgemisches unlöslich ist, wobei der oder die Bestandteil(e) in der wäßrigen Phase löslich ist/sind.

14. Verfahren nach einem der Ansprüche 1 bis 13, dadurch gekennzeichnet, daß man ein Initiatorsystem verwendet, das aus der Gruppe, gebildet von den Persalzen, Wasserstoffperoxid, den Persalzen oder Wasserstoffperoxid kombiniert mit einem anorganischen oder organischen Reduktionsmittel, den Initiatorsystemmen, bei denen einer der Bestandteile in dem Monomer- oder Comonomeransatz löslich und in Wasser schwach löslich ist und der andere Bestandteil in Wasser löslich und im Monomer- oder Comonomeransatz unlöslich ist, den Initiatorsystemen, gebildet aus reduzierenden Verbindugen, die im Monomer- oder Comonomeransatz löslich und in Wasser wenig löslich sind, und oxidierenden aktivierenden Verbindungen, die im Monomer- oder Comonomeransatz umlöslich und in Wasser löslich sind, ausgewählt ist.

15. Verfahren nach einem der Ansprüche 1 bis 14, dadurch gekennzeichnet, daß das Initiatorsystem 0,01 bis 1 Gew.-%, vorzugsweise 0,02 bis 0,1 Gew.-%, ausmacht, bezogen auf das/die eingesetzte(n) Monomere(n).

16. Verfahren nach einem der Ansprüche 1 bis 15, dadurch gekennzeichnet, daß das Initiatorsystem 0,01 bis 5 Gew.-%, vorzugsweise 0,05 bis 1,5 Gew.-%, ausmacht, bezogen auf das Wasser der wäßrigen Lösung.